# EUROPEAN PATENT SPECIFICATION

(11) **EP 1 214 166 B1**
(45) Date of publication and mention of the grant of the patent: **20.10.2004**
(21) Application number: 00950174.3
(22) Date of filing: 20.07.2000
(51) Int. Cl.: B22F 3/15

(54) **DEVICE FOR HOT ISOSTATIC PRESSING**
VORRICHTUNG ZUM HEISSISOSTATISCHEN PRESSEN
DISPOSITIF DE COMPRESSION ISOSTATIQUE A CHAUD

(30) Priority: 18.08.1999 SE 9902943
(43) Date of publication of application: 19.06.2002
(73) Proprietor: FLOW HOLDINGS SAGL, 6919 Carabietta (CH)
(72) Inventor: BERGMAN, Carl, S-735 34 Surahammar (SE); LINDHOLM, Karl-Erik, S-724 62 Västeras (SE)
(74) Representative: Henningsson, Gunnar
(86) International application number: PCT/SE2000/001507
(87) International publication number: WO 2001/014087

(56) References cited:
- EP-A1- 0 133 808
- EP-A1- 0 395 884
- WO-A1-97/20652
- SE-B- 465 358
- US-A- 3 622 135

## Description

### Technical Field

The present invention relates to a device for hot isostatic pressing. It relates particularly to a device comprising a pressure vessel, a heat-insulating casing arranged inside the pressure vessel, a furnace chamber enclosed by the casing, and, arranged therein, a load compartment for receiving articles to be pressed, a control means which is arranged between the load compartment and an inner roof of the casing and which defines a space between itself and said inner roof, the control means being arranged to control a flow of a pressure medium from the load compartment to said space and thence to an area close to a side wall of the casing, and said control means comprising at least one opening to permit said flow of pressure medium from the load compartment to said space.

### Background Art

Hot isostatic pressing (HIP) is a technique that is being used more and more, thanks to the excellent results achieved. It is used, for instance, with the aid of heating combined with high gas pressure in said furnace chamber, in order to achieve pressing out of "shrinkages" in castings such as for turbine blades for aircraft in order to substantially increase their strength and service life. Another field of application is the manufacture of products with an extremely compact and pore-free material by compressing powder and simultaneously heating the material.

Typical pressures used in hot isostatic pressing are 300-5000 bar, the temperature then usually varying between 500 and 2200°C. A temperature of approximately 75% of the fusion temperature of the material in question is generally chosen. An inert gas such as argon is normally used as pressure medium.

Devices for hot isostatic pressing are not usually provided with heating elements placed in the area of the inner roof of the casing since such solutions are expensive and result in problems with reliable functioning of the device. Heating elements are therefore normally arranged only on the inside of the casing walls and/or in the bottom of the device, below the load compartment.

Even if the furnace roof is very well insulated, the heat flux through the roof causes the gas nearest the surface of the inner roof to be cooled. This results in instability since the cooler gas, which has higher density, falls down in different places in the charge basket. This causes an unacceptable inaccuracy in the temperature of the upper part of the charge. Devices of the type described in the introduction have been proposed to solve this problem.

According to known technique the control means for controlling the pressure medium from the space between the control means and the inner roof of the casing is preferably in the form of a substantially horizontal shield.

However, such arrangements have the drawback that the gas cooled by the inner roof of the casing tends to remain in the space between the shield and the inner roof, or to flow out towards the periphery of the shield, i.e. towards the side wall of the casing, only in small quantities. This results in the gas in said space becoming relatively intensely cooled, and thus also cooling the shield. A cooled shield results in gas in the load compartment in contact with the lower side of the shield being cooled and therefore being able to form cold gas collections which fall down into the load compartment and unfavourably affect the temperature situation there.

### Summary of the Invention

The object of the present invention is to provide a device that makes it possible to prevent a pressure medium that is cooled via the inner roof of the casing, from directly or indirectly giving rise to cooled collections of pressure medium falling down into the load compartment and unfavourably affecting the temperature situation there. The device should promote reliable hot isostatic pressing with as few unfavourable temperature variations as possible in the load compartment.

This object is achieved with the aid of a device of the type defined in the introduction, which is characterised in that the opening emerges into said space at a level higher than the level at which a peripheral part of the control means is located in an area near the side wall of the casing. Such a level difference encourages the flow of the colder pressure medium from said space towards and along the side walls of the casing. A continuous and sufficient flow avoids such intense cooling of the control means that a pressure medium, preferably a gas, in the load compartment immediately below the control means is cooled and forms cold collections that subsequently fall down into the load compartment. The risk of cold collections of the pressure medium in the space between the control means and the inner roof falling down into the load compartment via the opening in the control means is also reduced or eliminated.

It will be understood that the peripheral part of the control means is close to the side wall of the casing, but that a gap exists between said peripheral part and the casing wall, so that the pressure medium can be permitted to continue to descend along the casing wall to a place in the furnace chamber where it can be re-heated and then returned to the load compartment. The boundary between the load compartment and the area close to the casing wall, whence the cooled pressure medium is conducted, may be somewhat diffuse since there is no need for a wall or the like to separate these areas in the furnace chamber. Of prime importance for the invention, however, is that the area to which the cooled medium is conducted is laterally displaced so far from the load compartment that the descending cold pressure medium is unable to reach the load compartment and create local cold zones there, thereby affecting the pressing result.

In accordance with a preferred embodiment the control means comprises a shield that is substantially gas-tight and shields the load compartment from the space between the control means and the inner roof of the casing. The shield is preferably made of a heat-resistant material, e.g. a heat-resistant metal or metal alloy. It preferably has an outer periphery with a shape substantially corresponding to the inner dimension of the casing in the area where said outer periphery and inner dimension are adjacent. Since the casing preferably defines a cylinder, the periphery of the shield is preferably circular.

In accordance with another preferred embodiment the opening is arranged substantially centrally in the control means. The control means is preferably arranged so that the opening is arranged substantially centrally above the load compartment. A stable, continuous flow of the pressure medium is thus promoted from the load compartment into the space between the control means and the inner roof, and on towards the side wall of the casing. Being arranged as a shield, a number of different shapes are possible for the control means. The shield may be in the form of a truncated cone, for instance, with the opening at the centre of the cone.

In accordance with another preferred embodiment the control means has such extension in the horizontal direction that it substantially covers the load compartment and prevents pressure medium cooled by the inner roof of the casing from falling down from said space to the load compartment. A control means or shield with too little extension in the horizontal direction would greatly reduce or entirely eliminate the effect of the invention.

In accordance with another preferred embodiment the shield defining the control means is heat-insulated. This facilitates maintaining the temperature difference above and below the shield, and also the flow of pressure medium from said space to the area near the side wall of the casing.

The device preferably comprises heating elements for heating the pressure medium, which are arranged along the sides of the casing or at its bottom. The control means is then arranged to control a flow of the pressure medium cooled by the inner roof of the casing from the space between the control means and the inner roof to said heating elements, without the cooled pressure medium flowing through the load compartment. When the heating elements are arranged along the side walls of the casing, the control means is preferably arranged to control the flow of the pressure medium to a gap between the casing wall and said heating elements. When the pressure medium has been heated sufficiently by the heating elements, it may be permitted to flow into the load compartment. In the case of an open furnace chamber, without a partition wall between the load compartment and the area near the casing wall, this will take place automatically as a result of the flow pattern occurring in the furnace chamber.

Additional features and advantages of the device in accordance with the invention will be revealed in the detailed description and in the appended claims.

### Brief Description of the Drawings

The invention will be described in the following by way of example, with reference to the accompanying drawings in which
Fig. 1 is a cross-sectional view from the side of a first embodiment of the device in accordance with the invention and
Fig. 2 is a cross-sectional view from the side of a second embodiment of the device in accordance with the invention.

### Detailed Description of Preferred Embodiments

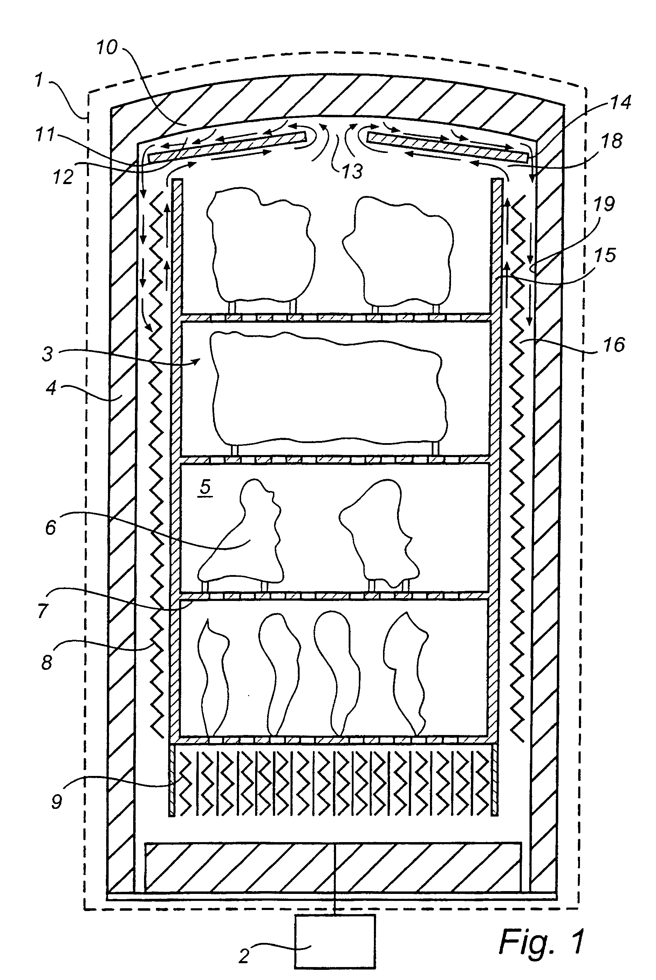

Fig. 1 shows a first embodiment of the device in accordance with the invention. The device is one for hot isostatic pressing and it will therefore be understood that the various parts thereof are suitably dimensioned for this purpose. The device comprises a pressure vessel 1 indicated by broken lines, the walls of which preferably comprise a winding of piano wire in order to withstand the high pressures generated inside the vessel. A compressor is also schematically indicated by a box 2, arranged to pump a gas, preferably an inert gas such as argon, into a furnace chamber 3 while compressing it so that an extremely high gas pressure is achieved, e.g. in the order of 300-5000 bar, in the furnace chamber. The device is also provided with a heat-insulating casing 4 surrounding the furnace chamber 3 and arranged to reduce heat loss to the surrounding pressure vessel 1.

The furnace chamber 3 comprises a load compartment 5, in which charges in the form of articles 6 to be pressed are arranged on grids 7 on a number of shelves. The grids 7 and articles 6 are arranged to allow the pressure medium, i.e. the hot gas, to flow up past them through the load compartment 5.

The casing 4 is substantially cylindrical in shape, with a side wall defining a substantially circular inner dimension. A number of heating elements 8 are arranged along the side wall of the casing 4. These preferably comprise metal wires arranged in known manner. The device preferably also comprises heating elements 9 arranged at the bottom of the furnace chamber 3, below the load compartment 5.

The load compartment 5 extends up towards an inner roof 10 of the casing 4. For reasons known per se, no heating elements are present in the area of the inner roof 10. Hot gas flowing from the load compartment 5 up towards the inner roof 10 will therefore transfer heat to the inner roof 10 and be cooled. To avoid collections of cooled gas remaining in this area and subsequently descending and affecting the temperature situation in the load compartment 5, the device comprises a first control means 11 that extends like a shield in the area close to the inner roof 10. Between itself and the inner roof 10 the shield 11 defines a space 12 which, in an area close to the outer periphery of the shield 11, communicates with an area of the furnace chamber 3 close to the side wall 19 of the casing 4. The shield 11 comprises an opening 13, preferably a substantially circular hole arranged centrally in the shield 11. The opening 13 is arranged substantially immediately above the centre or centre line of the load compartment 5. The shield 11 is arranged to control a flow of hot gas from the load compartment 5 via the opening 13 to the space 12, and on to the area adjacent the side wall 19 of the casing 4. The shield 11 is arranged to prevent collections of gas cooled by the inner roof 10 from falling back down into the load compartment 5. Instead, the shield 11 conducts the gas obliquely downwards, out towards the side wall 19 of the casing 4. Since cold gas is denser than hot gas, the gas will descend along the side wall 19 of the casing 4. However, it will be heated by the heating elements 8 and/or 9, so that it finally has substantially the same temperature as the other gas and can flow in and mix with this in the load compartment 5 without detrimental effect on the temperature situation there.

To achieve a uniformly distributed and continuous flow of gas through the space 12 and on towards the side wall 19 of the casing 4, the opening 13 emerges into the space 12 at a higher level in the furnace chamber 3 than the level at which the outer periphery 14 of the shield 11 is arranged in that area where the space 12 communicates with the furnace chamber 3 at the side wall 19 of the casing 4. This level difference exploits the fact that the cooled gas has greater density than the hot gas. A self-convection is thus generated which forces the flow through the space 12 and thereby prevents cold gas from remaining in the space 12.

The shield 11 is preferably heat-insulated. In this manner, a difference in temperature between the lower side and the upper side of the shield can be obtained, which in turn promotes the flow through the space 12.

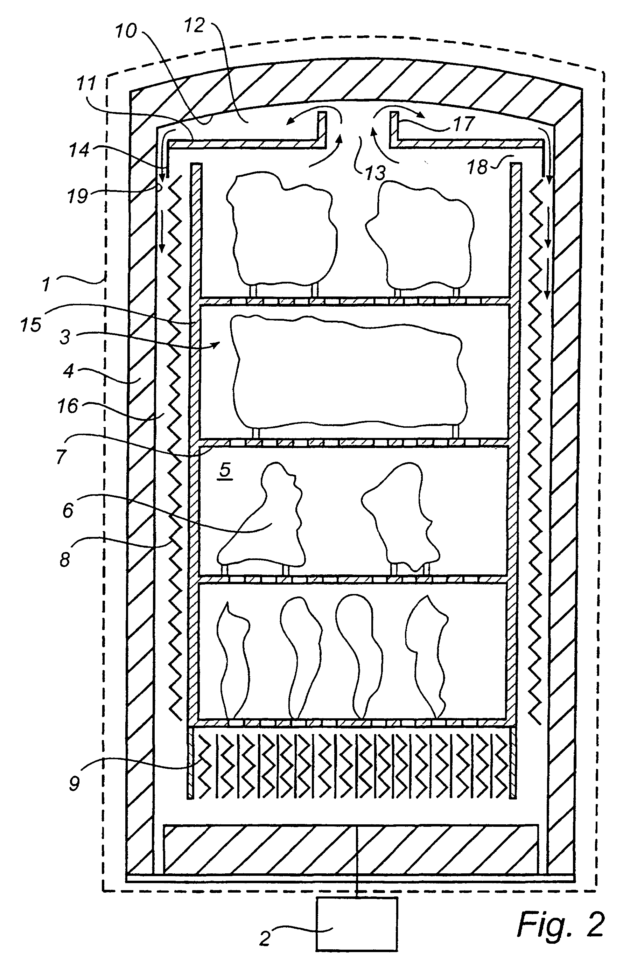

The device in accordance with Figs 1 and 2 also comprises a second control means 15 in the form of a cylinder arranged in the furnace chamber 3 and extending in a substantially vertical direction inside the furnace chamber 3, surrounding the load compartment 5, defining an interspace 16 between itself and the side wall 19 of the casing 4, and being arranged to control a flow of pressure medium, i.e. the gas, upwards in the load compartment 5. The first control means, i.e. the shield 11, controls the flow of the gas from the space 12 to the interspace 16. The second control means, i.e. the cylinder 15, defines an opening towards the first control means, i.e. the shield 11, the first control means 11 having such extension in the horizontal direction that it covers said opening in the horizontal direction. If this were not the case, there would be a risk of collections of cold gas not being conducted sufficiently far to the side in relation to the load compartment 5 and instead falling into the load compartment 5 on the inside of the cylinder 15.

Fig. 2 shows an alternative embodiment of the device in accordance with the invention. Here the first control means 11 also overlaps the second control means 15 in the vertical direction, which further reduces - in practice eliminates - the risk of cold collections of gas falling down from the space 12 into the load compartment 5.

The first control means 11 shown here is shaped somewhat differently from in the first embodiment. However, the mouth of the opening 13 into the space 12 is still located at a higher level than the periphery 14 of the first control means, i.e. the shield 11, which periphery defines the vertically lowest part of the first control means 11. In this case the peripheral part 14 constitutes the edge of a substantially circular flange that forms part of the shield 11 and extends some way down into the furnace chamber 3 along the side wall 19 of the casing 4. The peripheral part 14 is thus at a lower level than is the case in the embodiment shown in Fig. 1. Similarly, a substantially cylindrical flange or pipe section 17 has been arranged at the opening 13. The pipe section 17 forms an extension of the wall around the opening 13 in the shield 11 and results in the mouth of the opening 13 being located at a higher level in the space 12.

Both the device according to Fig. 1 and that according to Fig. 2 are provided with at least one channel or gap 18 arranged between the first control means 11 and the second control means 15, which channel or gap 18 permits direct communication between said interspace 16 and the load compartment 5. Cold gas from the space 12 that has been heated by the heating elements 8 can therefore be returned to the load compartment 5 via said gap or channel 18. This is indicated by arrows in Fig. 1. Alternatively, the gap/channel 18 could be omitted and the shield 11 permitted to rest on the upper rim of the cylinder 15. This would result in a different flow pattern from that obtained with the use of the gap or channel 18.

It will be understood that a number of alternative embodiments of the device in accordance with the invention will be obvious to one skilled in the art, without departing from the scope of the invention as defined in the appended claims, supported by the description and drawings.

It should be particularly noted that a multitude of different embodiments of the first control means 11 are no doubt possible within the scope of the invention so long as the basic concept of the invention, i.e. the arrangement of a level difference between the inlet to and the outlet from the space 12, is utilised.

The expression "area near the side wall 19 of the casing 4" applies primarily to all areas laterally beside the load compartment 5, but particularly to the area very close to the side wall 19. A screen or channel preventing the cooled gas from coming into direct contact with the side wall 19 is also possible without departing from the scope of the invention.

## Claims

1. A device for hot isostatic pressing comprising
- a pressure vessel (1),
- a heat-insulating casing arranged inside the pressure vessel (1),
- a furnace chamber (3) enclosed by the casing (4), and, arranged therein, a load compartment (5) for receiving articles (6) to be pressed,
- a control means (11) which is arranged between the load compartment (5) and an inner roof (10) of the casing (4), and which defines a space (12) between itself and said inner roof (10), the control means (11) being arranged to control a flow of a pressure medium from the load compartment (5) to said space (12) and thence to an area close to a side wall (19) of the casing (4), and said control means (11) comprising at least one opening (13) to permit said flow of pressure medium from the load compartment (5) to said space (12), **characterised in that** the opening (13) emerges into said space (12) at a level higher than the level at which a peripheral part (14) of the control means (11) is located in an area near the wall (19) of the casing (4).

2. A device as claimed in claim 1, **characterised in that** the control means (11) comprises a shield that substantially shields the load compartment (5) from said space (12).

3. A device as claimed in claim 2, **characterised in that** the shield (11) is substantially gas-tight.

4. A device as claimed in any one of claims 1-3, **characterised in that** said opening (13) is arranged substantially centrally in the control means (11).

5. A device as claimed in any one of claims 1-4, **characterised in that** the control means (11) has such extension in the horizontal direction that it substantially covers the load compartment (5) and prevents pressure medium cooled by the inner roof (10) of the casing (4) from falling down from said space (12) to the load compartment (5).

6. A device as claimed in any one of claims 2-5, **characterised in that** the shield (11) is heat-insulated.

7. A device as claimed in any one of claims 1-6, **characterised in that** it comprises heating elements (8, 9), arranged along the sides of the casing (4) or at its bottom, for heating the pressure medium.

8. A device as claimed in claim 7, **characterised in that** the control means (11) is arranged to control a flow of pressure medium cooled by the inner roof (10) of the casing (4) from the space (12) between the control means (11) and the inner roof (10) to said heating elements (8, 9), without the cooled pressure medium flowing through the load compartment.

9. A device as claimed in any one of claims 1-8, **characterised in that** it comprises a second control means (15) that extends in a substantially vertical direction inside the furnace chamber (3), surrounds the load compartment (5), defines an interspace (16) between itself and the side wall (19) of the casing (4), and is arranged to control a flow of pressure medium upwards in the load compartment (5), said first control means (11) controlling the flow of pressure medium from said space (12) to said space (16).

10. A device as claimed in claim 9, **characterised in that** the second control means (15) defines an opening towards the first control means (11), and **in that** the first control means (11) has such extension in the horizontal direction that it covers said opening in the horizontal direction.

11. A device as claimed in claim 9 or claim 10, **characterised in that** the first control means (11) overlaps the second control means (15) in the vertical direction.

12. A device as claimed in any one of claims 9-11, **characterised in that** at least one channel or gap (18) is arranged between the first control means (11) and the second control means (15), which channel or gap (18) permits direct communication between said interspace (16) and the load compartment (5).

13. A device as claimed in any one of claims 9-12, **characterised in that** the second control means (15) has substantially cylindrical shape and extends in the vertical direction inside the casing (4).

## Patentansprüche

1. Vorrichtung zum isostatischen Heißpressen, die umfasst:
einen Druckbehälter (1),
ein wärmeisolierendes Gehäuse, das in dem Druckbehälter (1) angeordnet ist,
eine Ofenkammer (3), die von dem Gehäuse (4) umschlossen wird und darin angeordnet ist, eine Füllkammer (5), die zu pressende Gegenstände (6) aufnimmt,
eine Steuereinrichtung (11), die zwischen der Füllkammer (5) und einer inneren Decke (10) des Gehäuses (4) angeordnet ist, und die einen Raum (12) zwischen sich selbst und der inneren Decke begrenzt, wobei die Steuereinrichtung (11) so eingerichtet ist, dass sie einen Strom vom Druckmedium aus der Füllkammer (5) zu dem Raum (12) und damit zu einem Bereich nahe an einer Seitenwand (19) des Gehäuses (4) steuert, und die Steuereinrichtung (11) wenigstens eine Öffnung (13) umfasst, um den Strom eines Druckmediums aus der Füllkammer (5) in den Raum (12) zu ermöglichen, **dadurch gekennzeichnet, dass** die Öffnung (13) in den Raum (12) in einer Höhe über der Höhe eintritt, an der sich ein Randteil (14) der Steuereinrichtung (11) in einem Bereich in der Nähe der Wand (19) des Gehäuses (4) befindet.

2. Vorrichtung nach Anspruch 1, **dadurch gekennzeichnet, dass** die Steuereinrichtung (11) eine Abschirmung umfasst, die im Wesentlichen die Füllkammer (5) gegenüber dem Raum (12) abschirmt.

3. Vorrichtung nach Anspruch 2, **dadurch gekennzeichnet, dass** die Abschirmung (11) im Wesentlichen gasdicht ist.

4. Vorrichtung nach einem der Ansprüche 1-3, **dadurch gekennzeichnet, dass** die Öffnung (13) im Wesentlichen mittig in der Steuereinrichtung (11) angeordnet ist.

5. Vorrichtung nach einem der Ansprüche 1-4, **dadurch gekennzeichnet, dass** die Steuereinrichtung (11) eine solche Abmessung in der horizontalen Richtung hat, dass sie die Füllkammer (5) im Wesentlichen abdeckt und verhindert, dass durch die Innendecke (10) des Gehäuses (4) abgekühltes Druckmedium aus dem Raum (12) in die Füllkammer (5) nach unten sinkt.

6. Vorrichtung nach einem der Ansprüche 2-5, **dadurch gekennzeichnet, dass** die Abschirmung (11) wärmeisoliert ist.

7. Vorrichtung nach einem der'Ansprüche 1-6, **dadurch gekennzeichnet, dass** sie Heizelemente (8, 9) umfasst, die an den Seiten des Gehäuses (4) oder an seinem Boden angeordnet sind, um das Druckmedium zu erhitzen.

8. Vorrichtung nach Anspruch 7, **dadurch gekennzeichnet, dass** die Steuereinrichtung (11) so eingerichtet ist, dass sie einen Strom von durch die Innendecke (10) des Gehäuses (4) abgekühltem Druckmedium aus dem Raum (12) zwischen der Steuereinrichtung (11) und der Innendecke (10) zu den Heizelementen (8, 9) steuert, ohne dass das abgekühlte Druckmedium durch die Füllkammer strömt.

9. Vorrichtung nach einem der Ansprüche 1-8, **dadurch gekennzeichnet, dass** sie eine zweite Steuereinrichtung (15) umfasst, die sich in einer im Wesentlichen vertikalen Richtung im Inneren der Ofenkammer (3) erstreckt, die Füllkammer (5) umgibt, einen Zwischenraum (16) zwischen sich und der Seitenwand (19) des Gehäuses (4) begrenzt und so eingerichtet ist, dass sie einen Strom von Druckmedium nach oben in die Füllkammer (5) steuert, wobei die erste Steuereinrichtung (11) den Strom von Druckmedium aus dem Raum (12) in den Raum (16) steuert.

10. Vorrichtung nach Anspruch 9, **dadurch gekennzeichnet, dass** die zweite Steuereinrichtung (15) eine Öffnung in Richtung der ersten Steuereinrichtung (11) aufweist, und dadurch, dass die erste Steuereinrichtung (11) in der horizontalen Richtung eine solche Abmessung hat, dass sie die Öffnung in der horizontalen Richtung abdeckt.

11. Vorrichtung nach Anspruch 9 oder Anspruch 10, **dadurch gekennzeichnet, dass** die erste Steuereinrichtung (11) die zweite Steuereinrichtung (15) in der vertikalen Richtung überdeckt.

12. Vorrichtung nach einem der Ansprüche 9-11, **dadurch gekennzeichnet, dass** wenigstens ein Kanal oder Spalt (18) zwischen der ersten Steuereinrichtung (11) und der zweiten Steuereinrichtung (15) angeordnet ist, wobei der Kanal oder Spalt (18) direkte Verbindung zwischen dem Zwischenraum (16) und der Füllkammer (5) ermöglicht.

13. Vorrichtung nach einem der Ansprüche 9-12, **dadurch gekennzeichnet, dass** die zweite Steuereinrichtung (15) eine im Wesentlichen zylindrische Form hat und sich in der vertikalen Richtung im Inneren des Gehäuses (4) erstreckt.

## Revendications

1. Dispositif de compression isostatique à chaud comprenant
- une enceinte (1) sous pression,
- une enveloppe de calorifugeage disposée à l'intérieur de l'ensemble (1) sous pression,
- un laboratoire (3) enfermé par l'enveloppe (4) et, dans celle-ci, un compartiment (5) de charge destiné à recevoir des objets (6) à comprimer,
- un moyen (11) de réglage, qui est disposé entre le compartiment (5) de charge et une voûte (10) intérieure de l'enveloppe (4) et qui définit un espace (12) entre lui-même et la voûte (10) intérieure, le moyen (11) de réglage étant conçu pour régler un courant d'un fluide sous pression du compartiment (5) de charge à l'espace (12) et ainsi à une zone proche d'une paroi (19) latérale de l'enveloppe (4) et le moyen (11) de réglage comprenant au moins une ouverture (13) pour permettre au courant de fluide sous pression d'aller du compartiment (5) de charge à l'espace (12), **caractérisé en ce que** l'ouverture (13) débouche dans l'espace (12) à un niveau supérieur au niveau auquel une partie (14) périphérique du moyen (11) de réglage est placée dans une zone proche de la paroi (19) de l'enveloppe (4).

2. Dispositif suivant la revendication 1, **caractérisé en ce que** le moyen (11) de réglage comprend un bouclier qui protège sensiblement le compartiment (5) de charge de l'espace (12).

3. Dispositif suivant la revendication 2, **caractérisé en ce que** le bouclier (11) est sensiblement étanche au gaz.

4. Dispositif suivant l'une quelconque des revendications 1 à 3, **caractérisé en ce que** l'ouverture (13) est disposée sensiblement au centre du moyen (11) de réglage.

5. Dispositif suivant l'une quelconque des revendications 1 à 4, **caractérisé en ce que** le moyen (11) de réglage a une étendue telle dans la direction horizontale qu'il couvre sensiblement le compartiment (5) de charge et empêche du fluide sous pression refroidi par la voûte (10) inférieure de l'enveloppe (4) de tomber de l'espace (12) dans le compartiment (5) de charge.

6. Dispositif suivant l'une quelconque des revendications 2 à 5, **caractérisé en ce que** le bouclier (11) est calorifugé.

7. Dispositif suivant l'une quelconque des revendications 1 à 6, **caractérisé en ce qu'**il comprend des éléments (8, 9) de chauffage disposés le long des côtés de l'enveloppe (4) ou sur son fond afin de chauffer le fluide sous pression.

8. Dispositif suivant la revendication 7, **caractérisé en ce que** le moyen (11) de réglage est agencé de façon à régler un courant de fluide sous pression refroidi par la voûte (10) intérieure de l'enveloppe (4) de l'espace (12) entre le moyen (11) de réglage et la voûte (10) intérieure aux éléments (8, 9) de chauffage, sans que le fluide sous pression refroidi ne passe dans le compartiment de charge.

9. Dispositif suivant l'une quelconque des revendications 1 à 8, **caractérisé en ce qu'**il comprend un deuxième moyen (15) de réglage, qui s'étend dans une direction sensiblement verticale à l'intérieur du laboratoire (3), qui entoure le compartiment (5) de charge, qui définit un espace (16) intermédiaire entre soi-même et la paroi (19) latérale de l'enveloppe (4) et qui est agencé pour régler un courant de fluide sous pression ascendant dans le compartiment (5) de charge, le premier moyen (11) de réglage réglant le courant de fluide sous pression allant de l'espace (12) à l'espace (16).

10. Dispositif suivant la revendication 9, **caractérisé en ce que** le deuxième moyen (15) de réglage définit une ouverture vers le premier moyen (11) de réglage et **en ce que** le premier moyen (11) de réglage a une étendue telle dans la direction horizontale qu'il couvre l'ouverture dans la direction horizontale.

11. Dispositif suivant la revendication 9 ou la revendication 10, **caractérisé en ce que** le premier moyen (11) de réglage chevauche le deuxième moyen (5) de réglage dans la direction verticale.

12. Dispositif suivant l'une quelconque des revendications 9 à 11, **caractérisé en ce qu'**au moins un canal ou un intervalle (18) est prévu entre le premier moyen (11) de réglage et le deuxième moyen (15) de réglage, ce canal ou cet intervalle (18) permettant une communication directe entre l'espace (16) intermédiaire et le compartiment (5) de charge.

13. Dispositif suivant l'une quelconque des revendications 9 à 12, **caractérisé en ce que** le deuxième moyen (15) de commande a une forme sensiblement cylindrique et s'étend dans la direction verticale à l'intérieur de l'enveloppe (4).
